# EUROPÄISCHE PATENTSCHRIFT

(11) **EP 1 671 826 B1**
(45) Veröffentlichungstag und Bekanntmachung des Hinweises auf die Patenterteilung: **09.12.2009**
(21) Anmeldenummer: 05027414.1
(22) Anmeldetag: 14.12.2005
(51) Int. Cl.: B60J 1/20

(54) **Seitenfensterrollo für Kraftfahrzeuge**
Roller blind for vehicle side window
Store à enrouleur pour vitres latérales de véhicule

(30) Priorität: 14.12.2004 DE 102004060208
(43) Veröffentlichungstag der Anmeldung: 21.06.2006
(73) Patentinhaber: HS Products Engineering GmbH, 82239 Alling (DE)
(72) Erfinder: Ziegenbein, Werner, 81929 München (DE)
(74) Vertreter: Eisenführ, Speiser & Partner

(56) Entgegenhaltungen:
- DE-A1- 3 822 378
- DE-A1- 10 005 970
- DE-A1- 10 216 186

## Beschreibung

Die Erfindung betrifft ein Seitenfensterrollo für Kraftfahrzeuge nach dem Oberbegriff des Patentanspruches 1.

Ein derartiges, beispielsweise aus DE 100 05 970 A1 bekanntes Seitenfensterrollo weist eine Rollobahn auf, welche im ausgezogenen Zustand zwei durch einen Fensterteilungssteg voneinander getrennte Fensterflächen ganz oder größtenteils abdeckt. Am ausziehbaren Ende der Rollobahn ist ein Zugstab befestigt, der mit Hilfe eines Schlittens entlang einer Führungsschiene geführt wird. Der Schlitten wird von einer Antriebseinrichtung, beispielsweise einem elektrischen Gleichstrommotor angetrieben. Die einzige Führungsschiene ist am vorderen vertikalen Fensterrahmen der vorderen Fensterfläche, welche sich in der Nähe der B-Säule des Fahrzeugs befindet, befestigt. Der Zugstab in Form eines Auslegers und einer Randverstärkungsleiste erstreckt sich über die vordere Fensterfläche. Zum Abdecken der hinteren Fensterfläche, welche als Dreiecksfenster ausgebildet ist, besitzt die Rollobahn einen entsprechenden Zuschnitt.

Bei einem weiteren aus der DE 100 05 970 A1 bekannten Ausführungsbeispiel wird der Zugstab, welcher sich entlang beider Fensterflächen erstreckt, sowohl entlang dem vorderen vertikalen Fensterrahmenteil der vorderen Fensterfläche als auch entlang dem Fensterteilungssteg durch Führungsmittel und Antriebsmittel gestützt und geführt.

Aufgabe der Erfindung ist es, ein Seitenfensterrollo der eingangs genannten Art zu schaffen, bei welchem mit einfachen Mitteln eine stabile Abdeckung der beiden durch den Fensterteilungssteg voneinander getrennten Fensterflächen erzielt wird.

Diese Aufgabe wird erfindungsgemäß durch die kennzeichnenden Merkmale des Patentanspruches 1 gelöst.

Bei der Erfindung kommt eine einzige Führungsschiene zur Führung des Schlittens, an welchem der Zugstab befestigt ist, zur Anwendung. Diese Führungsschiene ist am Fensterteilungssteg befestigt und der Zugstab erstreckt sich entlang beider Fensterflächen. Im ausgezogenen Zustand wird hierdurch eine zwischen den Enden des Zugstabes liegende Abstützung des Zugstabes und eine Halterung der Rollobahn an der gesamten Ausdehnung ihres oberen ausziehbaren Endes erreicht. Die Rollobahn deckt beide Fensterflächen ganz oder zumindest größtenteils ab. Die vordere Fensterfläche kann praktisch,insgesamt abdeckt werden und die hintere Fensterfläche, welche trapez- oder dreieckförmig ausgebildet ist, wird größtenteils oder annährend ganz abgedeckt.

Der Zugstab ist mittels wenigstens eines durch wenigstens ein Langloch gesteckten Befestigungsmittels am Schlitten befestigt. Als Befestigungsmittel kommen bevorzugt Schraubenverbindungen zum Einsatz. Vorzugsweise befindet sich das wenigstens eine Langloch am Zugstab und das Befestigungsmittel wird vorzugsweise durch Schraubenverbindung am Schlitten befestigt. Hierdurch können Fertigungstoleranzen ausgeglichen und eine Anpassung der Zugstabanordnung an den Verlauf der Oberkanten der beiden Fensterflächen bei straffer, insbesondere faltenfreier Rollobahnführung erreicht werden. Beispielsweise lässt sich ein Toleranzausgleich in der Größenordnung bis zu 5 mm, insbesondere 3 mm, erreichen. Hierzu können je nach Anzahl der Befestigungsstellen zwischen dem Schlitten und dem Zugstab entsprechende Langlöcher und Befestigungsmittel vorgesehen sein. Bevorzugt wird ein Langloch und ein zugehöriges Befestigungsmittel oder werden zwei Langlöcher und zwei zugehörige Befestigungsmittel zum Einsatz gebracht.

Ferner ist der Zugstab entlang dem Langloch bzw. entlang den Langlöchern beim Ausziehen und Einziehen der Rollobahn beweglich geführt . Man erreicht hierdurch eine kinematische Anpassung an die vorgegebene Geometrie der abzudeckenden Fensterflächen.

Die von der Führungsschiene vorgegebene Bewegungsrichtung des Schlittens kann parallel zum Fensterteilungssteg verlaufen. Eine solche Bewegungsrichtung kommt bevorzugt dann zur Anwendung, wenn der Fensterteilungssteg in Seitenansicht in etwa vertikal oder annährend vertikal verläuft.

Die von der Führungsschiene vorgegebene Bewegungsrichtung des Schlittens kann jedoch auch schräg zur Längsausdehnung des Fensterteilungsstegs verlaufen, um eine Schlittenbewegung in vertikaler Richtung oder annährend vertikaler Richtung in Seitenansicht des Fensters zu erreichen.

In bevorzugter Weise erstreckt sich das Langloch in Längsrichtung des Zugstabes.

Anhand der Figuren wird an Ausführungsbeispielen die Erfindung noch näher erläutert.

Es zeigt
- Fig. 1: in Seitenansicht ein erstes Ausführungsbeispiel;

- Fig. 2: eine Ausführungsform der Führungsschiene des Schlittens und des Zugstabes, insbesondere der Zugstabbefestigung am Schlitten beim Ausführungsbeispiel der Fig. 1;
- Fig. 3: ein zweites Ausführungsbeispiel in Seitenansicht;
- Fig. 4: eine Ausführungsform für die Führungsschiene, den Schlitten und die Zugstabbefestigung am Schlitten beim Ausführungsbeispiel der Fig. 3;
- Fig. 5: in Seitenansicht ein drittes Ausführungsbeispiel;
- Fig. 6: eine Ausführungsform für die Führungsschiene, den Schlitten und die Zugstabbefestigung am Schlitten beim Ausführungsbeispiel der Fig. 5; und
- Fig. 7: ein viertes Ausführungsbeispiel in Seitenansicht.

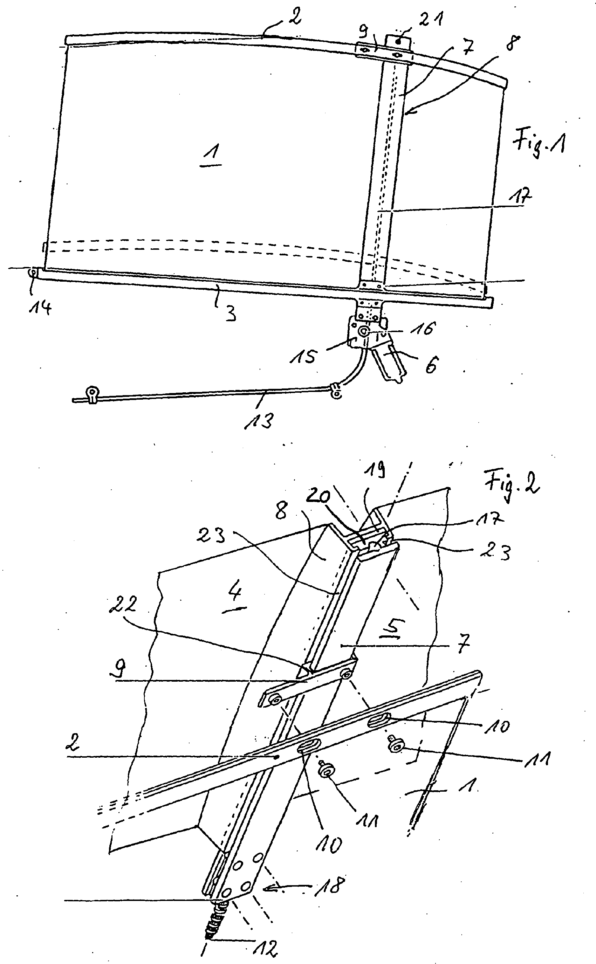

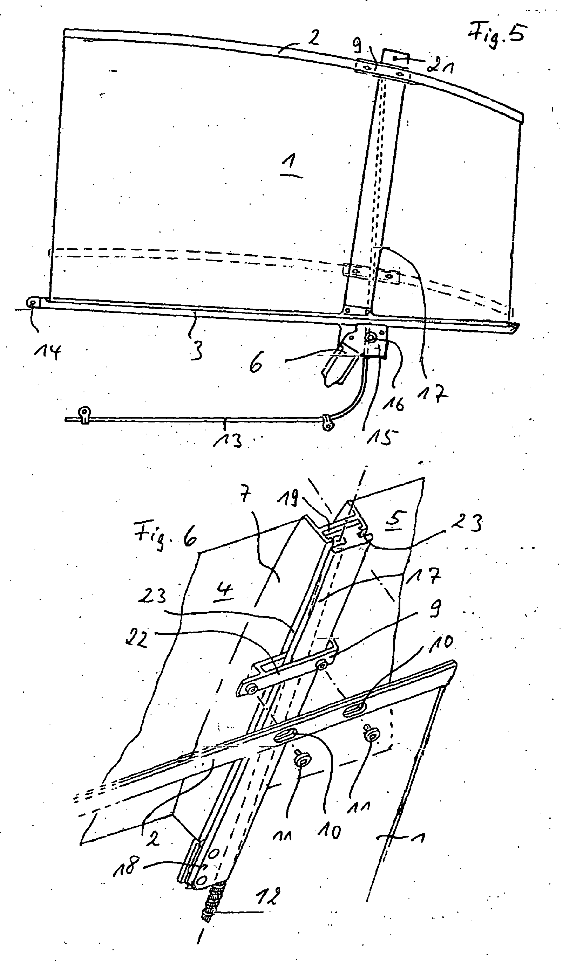

Die in den Figuren dargestellten Ausführungsbeispiele besitzen eine Rollobahn 1, welche im ausgezogenen Zustand, der in den Fig. 1, 3, 5 und 7 dargestellt ist, im wesentlichen beide Fensterflächen 4 und 5, die durch einen Fensterteilungssteg 8 voneinander getrennt sind, abdecken. Das obere ausziehbare Ende der Rollobahn 1 ist an einem Zugstab 2 befestigt. Der Zugstab 2 erstreckt sich bei ausgezogener Rollobahn etwa entlang der gesamten Oberkanten der Fensterflächen 4 und 5 zu beiden Seiten des Fensterteilungssteges 8. Da die hintere Fensterfläche 5 kleiner ist als die vordere Fensterfläche beträgt die Zugstablänge bei der hinteren Fensterfläche etwa ein Drittel oder ein Viertel der gesamten Zugstablänge. Die jeweiligen Teillängen des Zugstabes zu beiden Seiten des Fensterteilungssteges 8 hängen von den Ausdehnungen der beiden Fensterflächen 4, 5 in Fahrzeuglängsrichtung ab. Hierdurch wird eine stabile Abstützung der Rollobahn 1 im wesentlichen über ihre gesamte Ausdehnung in Längsausdehnung des Fahrzeugs am ausziehbaren Rollobahnende erreicht. An der Unterseite der Rollobahn 1 befindet sich eine Rollokassette 3, die im wesentlichen als Aufwickelvorrichtung für die Rollobahn dient. Wesentlicher Bestandteil ist eine Wickelwelle, auf welche die Rollobahn aufgewickelt werden kann. Die Rollobahn kann im aufgewickelten Zustand freiliegend oder geschützt in einem Kassettengehäuse untergebracht sein.

Die Abstützung der Rollokassette 3 und damit die Abstützung der Unterseite der Rollobahn 1, insbesondere im ausgezogenen Zustand erfolgt an einem Ende der Rollokassette, insbesondere am vorderen Ende der Rollokassette 3 in einer Befestigungsstelle 14. Eine zweite Befestigungsstelle ist unterhalb des Fensterteilungssteg 8 in einer gemeinsamen Befestigungsstelle 15 für eine Antriebseinrichtung 6, insbesondere einen elektrischen Gleichstrommotor vorgesehen.

In der Ruheposition, bei welcher die Rollobahn 1 in der Rollokassette 3 aufgewickelt ist, befindet sich der Zugstab 2 in einer unteren strichliert dargestellten Position unterhalb der unteren Kanten der Fensterflächen 4 und 5.

Der Zugstab 2 ist an einem Schlitten 9 befestigt. Wie im einzelnen noch ausgeführt wird, können die jeweiligen Schlitten 9 und Befestigungsstellen unterschiedlich ausgebildet sein. Den dargestellten Ausführungsbeispielen gemeinsam ist die Anordnung der Führungsschiene 7 entlang dem Fensterteilungssteg 8. Vorzugsweise sind die Führungsschienen 7 am Fensterteilungssteg 8 befestigt und sind hierzu mit Formschluss in entlang der jeweiligen Fensterteilungsstege 8 verlaufenden Befestigungsnuten (Längsnuten) 19 eingesetzt.

Die Antriebseinrichtung 6 ist vorzugsweise als elektrischer Gleichstrommotor, insbesondere Getriebemotor ausgebildet. Das Antriebsmoment wird beispielsweise über ein Ritzel 16, welches vom Elektromotor angetrieben wird, auf eine flexible Zug-/Druckstange, die insbesondere als Bürstenkabel ausgebildet sein kann, übertragen. Auf diese Weise wird die Drehbewegung des Elektromotors in eine translatorische Bewegung umgesetzt. Die flexible Zug-/Druckstange 12 wird in einem Führungskanal 17 der Führungsschiene 7 geführt. Im Ruhezustand oder teilweise ausgezogenen Zustand der Rollobahn 1 befindet sich die flexible Zug-/Druckstange (Bürstenkabel) 12 in einem rohrförmigen Auslauf 13 in der Türverkleidung der Fahrzeugtür, innerhalb welcher auch die Rollokassette 3 und die Antriebseinrichtung 6 verdeckt angeordnet sind. Es handelt sich bier vorzugsweise um die Fondtür des Fahrzeugs. Die angesprochenen Bauteile können sich jedoch auch in einer fest im Fahrzeug eingebauten Seitenbegrenzung des Fahrzeuginnenraums befinden.

Wie schon erläutert, sind die Führungsschienen 7 an den Fensterteilungsstegen 8 bei den Ausführungsbeispielen befestigt. Hierzu besitzt die jeweilige Führungsschiene 7 eine Befestigungsleiste 20, welche einstückig an die Führungsschiene 7 angeformt sein kann. Die Befestigungsleiste 20 wird beidseitig in der Längsnut 19, die an den Fensterteilungssteg 8 angeformt ist, festgehalten. Die Längsnut 19 kann hierzu die Befestigungsleiste 20 übergreifende Schenkel aufweisen, so dass die Führungsschiene 7 nach allen Richtungen hin über ihre gesamte Länge an den Fensterteilungssteg 8 befestigt ist.

Am oberen Ende besitzen die Führungsschienen 7 Befestigungspunkte 21 zum Befestigen der Führungsschienen 7 an ihren oberen Enden am Fahrzeugaufbau. An den unteren Enden der Führungsschienen 7 sind Befestigungsstellen 18 vorgesehen, mit denen die jeweilige Rollokassette 3 mit der Führungsschiene 7 fest verbunden werden kann. Ferner erfolgt die feste Verbindung der Führungsschiene 7 zusammen mit der jeweiligen Rollokassette 3 im Bereich der Befestigungsstellen 18 mit der gemeinsamen Befestigungsstelle 15, mit welcher auch die Antriebseinrichtung 6 am Fahrzeugaufbau, beispielsweise an der Fahrzeugtür befestigt wird.

Hierdurch können die Antriebseinrichtung, die Führungsschiene 7, die Rollokassette und die zugeordneten Teile, wie Rollobahn, Schlitten und Zugstab, als vorgefertigte Baueinheit ausgebildet werden, die in einfacher Weise an dem Fensterteilungssteg, beispielsweise durch Einschieben der Befestigungsleiste 20 in die Längsnut 19 angeordnet werden kann. Die Befestigung erfolgt dann in den oberen Befestigungspunkten 21 und der gemeinsamen Befestigungsstelle 15. Zusätzlich kann das vordere Ende der Rollokassette 3 in der vorderen Befestigungsstelle 14 am Fahrzeugaufbau befestigt werden.

Außerdem kann für unterschiedliche Bauformen und geometrische Ausgestaltungen der Fensterflächen 4 und 5 ein Seitenfensterrollo mit einheitlichem Aufbau und im wesentlichen identischen Bauelementen vorgesehen werden. Um unterschiedliche Neigungen der Fensterteilungsstege 8 für eine im wesentlichen vertikale oder eine angenäherte vertikale Bewegungsrichtung des Schlittens 9 und des Zugstabes 2 auszugleichen, müssen lediglich die Führungskanäle 17 in den Führungsschienen 7 entsprechend eingeformt werden.

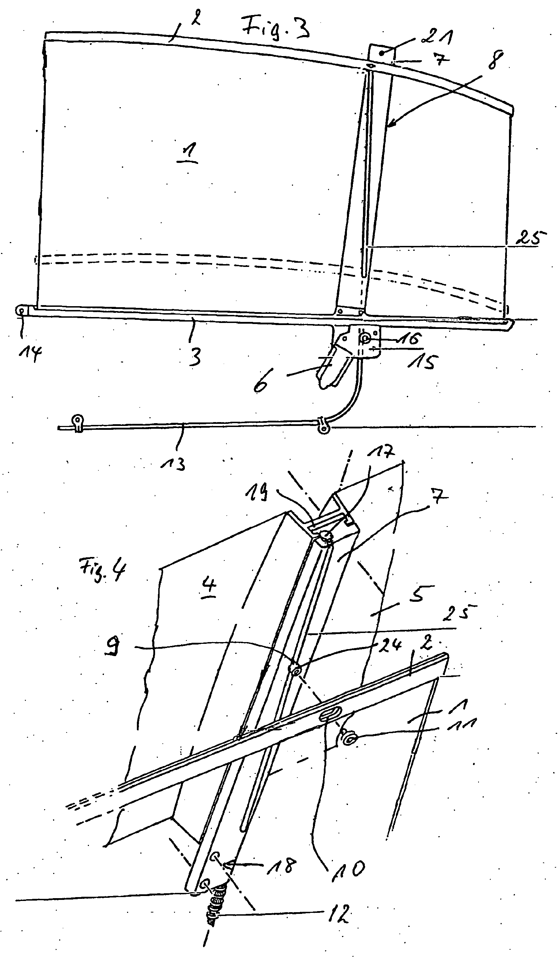

Bei den Ausführungsbeispielen der Fig. 1, 2 und 7 verlaufen die Führungskanäle 17 im wesentlichen parallel zu der Längserstreckung der Führungsschienen 7 bzw. der Fensterteilungsstege 8. Bei den Ausführungsbeispielen der Fig. 3 bis 6 verlaufen die Führungskanäle 17 schräg zur Längsausdehnung der Führungsschiänen 7 bzw. der Fensterteilungsstege 8. Die schräge Neigung ist derart, dass im wesentlichen eine Parallelführung zu den abzudeckenden Fensterflächen 4 und 5 sowie eine im wesentlichen vertikale oder annährend vertikale Bewegungsrichtung für den Schlitten 9 und den Zugstab 2 erreicht wird.

Bei den Ausführungsbeispielen der Fig. 1, 2 und 5, 6 ist der Schlitten 9 mit einem die Führungsschiene 7 umgreifenden Schlittenteil 22 ausgestattet. Seitliche Schenkel des umgreifenden Schlittenteils 22 greifen in seitliche Führungsnuten 23 an der Führungsschiene 7 ein. Die seitlichen Führungsnuten erstrecken sich in Längsrichtung der Führungsschiene 7. Der Schlitten 9 ist bei allen Ausführungsbeispielen an der flexiblen Zug-/Druckstange 12, insbesondere am oberen Ende dieser Stange befestigt und wird zusammen mit der Längsverschiebung der flexiblen Zug-/Druckstange 12 im Führungskanal 17 mit verschoben.

Die Befestigung des Zugstabes 2 erfolgt bei den Ausführungsformen 1, 2 und 5, 6 an zwei Befestigungsstellen. Hierzu sind im Zugstab 2 zwei Langlöcher 10 vorgesehen, durch die Befestigungsmittel 11 in Form von Befestigungsschrauben hindurchgesteckt sind und durch Schraubenverbindung mit den jeweiligen Schlitten 9 verbunden sind. Die Langlöcher 10 sind so bemessen, dass beispielsweise ein Toleranzausgleich in der Größenordnung von 3 mm oder geringfügig größer (bis zu 5 mm) möglich ist. Man erreicht hierdurch nach dem Einbau des Seitenfensterrollos im Fahrzeug die Möglichkeit der Anpassung an die geometrischen Gegebenheiten im Seitenfensterbereich des jeweiligen Fahrzeugs.

Beim Ausführungsbeispiel der Fig. 3 und 4 wird der Führungsschlitten im Führungskanal 17 der Führungsschiene 7 geführt. Der Schlitten ragt mit einem Führungszapfen 24 durch einen Schlitz 25 in der Führungsschiene 7. Der Schlitz 25 erstreckt sich parallel zum Führungskanal 17 in der Führungsschiene 7. Da beim Ausführungsbeispiel der Fig. 3 und 4 der Führungskanal 17 schräg zur Führungsschiene verläuft, verläuft auch der Schlitz 25 schräg zur Längsausdehnung der Führungsschiene 7. Bei einer Ausgestaltung des Ausführungsbeispiels der Fig. 3 und 4 derart, dass der Führungskanal 17 im wesentlichen parallel zur Längsausdehnung der Führungsschiene 7 sich erstreckt, erstreckt sich natürlich auch der Schlitz 25 etwa parallel zur Längsausdehnung der Führungsschiene 7.

Die Befestigung des Zugstabes 2 erfolgt an einer Befestigungsstelle. Hierzu ist im Zugstab 2 das Langloch 10 vorgesehen, durch welches das Befestigungsmittel 11 in Form einer Befestigungsschraube hindurchgesteckt wird. Das Befestigungsmittel 11 wird vorzugsweise durch Schraubverbindung mit dem Schlitten bzw. dem Führungszapfen 24 am Schlitten fest verbunden. Das Langloch 10 kann so bemessen sein, dass ein Toleranzausgleich in der Größenordnung von 3 mm und geringfügig größer (bis zu 5 mm) möglich ist, wie bei den vorherigen Ausführungsbeispielen schon erläutert wurde.

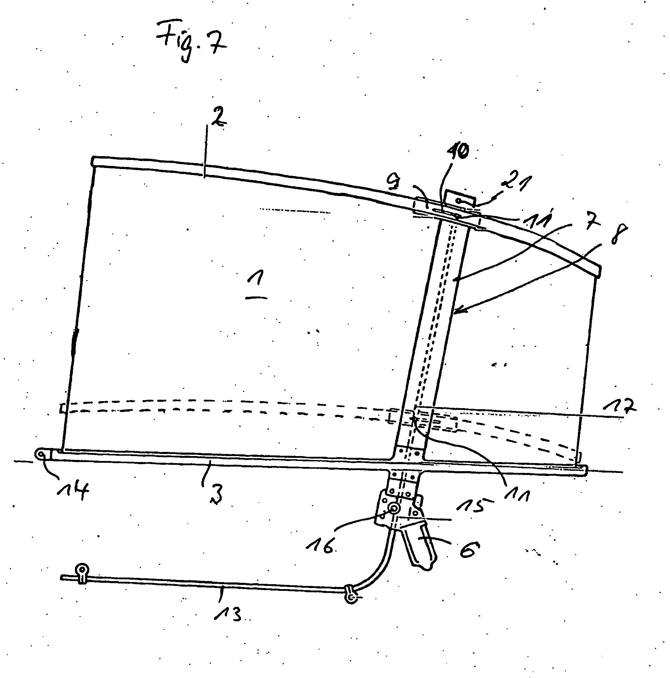

Beim Ausführungsbeispiel der Fig. 7 ist eine Befestigungsstelle zwischen dem Schlitten 9 und dem Zugstab 2 vorgesehen. Der Schlitten kann in der Weise ausgebildet sein, dass er an der Außenseite, wie bei den Ausführungsbeispielen der Fig. 1, 2 und 5, 6 geführt wird, oder wie beim Ausführungsbeispiel der Fig. 3, 4 im Führungskanal 17 geführt wird. Anstelle der einen Befestigungsstelle können auch zwei Befestigungsstellen vorgesehen sein. Beim Ausführungsbeispiel der Fig. 7 ist die Verbindung zwischen dem Zugstab 2 und dem Schlitten 9 derart, dass sich der Zugstab gegenüber dem Schlitten entlang dem Langloch 10 beim Ausziehen und Aufrollen der Rollobahn 1 bewegen kann. Hierdurch wird ein kinematischer Ausgleich zwischen den einzelnen Bauteilen erreicht. Der Längsschlitz 10 kann hierzu eine Ausdehnung von größenordnungsmäßig 50 mm (± 10 %) aufweisen. Anstelle der Führung des Führungskanals 17 parallel zur Führungsschiene 7 und zum Fensterteilungssteg 8 kann auch eine schräge Anordnung des Führungskanals 17, wie bei den Ausführungsbeispielen der Fig. 3 bis 6 vorgesehen sein.

Bei den beschriebenen Ausführungsbeispielen ist das entlang dem Führungskanal 17 geführte Antriebsübertragungsmittel, mit welchem das Antriebsmoment des Elektromotors auf den Schlitten 9 übertragen wird, als flexible Zug-/Druckstange 12, mit welcher der Schlitten 9 fest verbunden ist, ausgebildet. Anstelle dieses Drehmomentübertragungsmittels kann auch ein Spindeltrieb, welcher vom Elektromotor der Antriebseinrichtung 6 angetrieben wird, im Führungskanal 17 angeordnet sein. Der Schlitten 9 steht dann in Gewindeeingriff mit der Spindel und wird bei der Spindeldrehung entlang der Führungseinrichtung 7 beim Ausziehen und Aufwickeln der Rollobahn 1 bewegt. Jedes Drehmomentübertragungsmittel, welches geeignet ist, das vom Elektromotor vermittelte Antriebsdrehmoment in eine Längsbewegung des Schlittens 9 entlang der Führungsschiene zu wandeln, kann bei der Erfindung zum Einsatz kommen. Auf diese Weise ist es möglich, allein mit dem Elektromotor durch Umkehrung seiner Drehrichtung sowohl die Ausziehbewegung als auch das Aufwickeln der Rollobahn 1 beim Abdecken und Wiederfreigeben der beiden Fensterflächen 4 und 5 auszuführen.

### Bezugszeichenliste

- 1: Rollobahn
- 2: Zugstab
- 3: Rollokassette
- 4,5: Fensterflächen
- 6: Antriebseinrichtung
- 7: Führungsschiene
- 8: Fensterteilungssteg
- 9: Schlitten
- 10: Langloch
- 11: Befestigungsmittel
- 12: Antriebsübertragungsmittel (flexible Zug-/Druckstangenbürstenkabel)
- 13: Auslauf
- 14: vordere Befestigungsstelle der Rollokassette
- 15: gemeinsame Befestigungsstelle
- 16: Ritzel
- 17: Führungskanal
- 18: Befestigungsstellen
- 19: Längsnut
- 20: Befestigungsleiste an der Führungsschiene
- 21: obere Befestigungsstelle
- 22: umgreifendes Schlittenteil
- 23: seitliche Führungsnuten
- 24: Führungszapfen
- 25: Schlitz

## Patentansprüche

1. Seitenfensterrollo-Anordnung für Kraftfahrzeuge mit einer Rollobahn (1), welche im ausgezogenen Zustand (2) durch einen Fensterteilungssteg (8) voneinander getrennte Fensterflächen (4, 5) ganz oder größtenteils abdeckt, einem Zugstab (2), welcher am ausziehbaren-Ende der Rollobahn (1) befestigt ist, einer Rollokassette (3) zum Aufwickeln der Rollobahn (1), einer Antriebseinrichtung (6) für die Rollobahn (1), einer einzigen Führungsschiene (7) und einem entlang der Führungsschiene (7) geführten und von der Antriebseinrichtung (6) angetriebenen Schlitten (9), an welchem der Zugstab (2) befestigt ist, **dadurch gekennzeichnet, dass** die einzige Führungsschiene (7) am Fensterteilungssteg (8) befestigt ist, dass der Zugstab (2) sich auf beiden Seiten des Fensterteilungsstegs (8) entlang beider Fensterflächen (4, 5) erstreckt, dass der Zugstab (2) mittels wienigstens eines durch wenigstens ein Langloch (10) gesteckten Befestigungsmittels (11) am Schlitten (9) befestigt ist und dass der Zugstab (2) entlang dem wenigstens einen Langloch (10) gegenüber dem Schlitten (9) beweglich geführt ist.

2. Seitenfensterrollo-Anordnung nach Anspruch 1,
**dadurch gekennzeichnet, dass** die von der Führungsschiene (7) vorgegebene Bewegungsrichtung des Schlittens (9) parallel zum Fensterteilungssteg (8) verläuft.

3. Seitenfensterrollo-Anordnung nach Anspruch 1 oder 2,
**dadurch gekennzeichnet, dass** die von der Führungsschiene (7) vorgegebene Bewegungsrichtung des Schlittens (9) schräg zur Längsausdehnung des Fensterteilungsstegs (8) in vertikaler Richtung oder angenähert zur vertikalen Richtung verläuft.

4. Seitenfensterrollo-Anordnung nach einem der Ansprüche 1 bis 3,
**dadurch gekennzeichnet, dass** das Langloch (10) am Zugstab (2) vorgesehen ist und das Befestigungsmittel (11) am Schlitten (9) befestigt ist.

5. Seitenfensterrollo-Anordnung nach einem der Ansprüche 1 bis 4,
**dadurch gekennzeichnet, dass** das Langloch (10) sich in Längsrichtung des Zugstabes (2) erstreckt.

6. Seitenfensterrollo-Anordnung nach einem der Ansprüche 1 bis 5,
**dadurch gekennzeichnet, dass** die Rollokassette (3) mit dem unteren Ende der Führungsschiene (7) fest verbunden ist.

7. Seitenfensterrollo-Anordnung nach einem der Ansprüche 1 bis 6,
**dadurch gekennzeichnet, dass** die Führungsschiene (7) an ihrem oberen Ende und an ihrem unteren Ende über Befestigungsstellen (15, 21) am Fahrzeugaufbau befestigt ist.

8. Seitenfensterrollo-Anordnung nach einem der Ansprüche 1 bis 7,
**dadurch gekennzeichnet, dass** das untere Ende der Führungsschiene (7), die Rollokassette (3) und die Antriebseinrichtung (6) eine gemeinsame Befestigungsstelle (15) am Fahrzeugaufbau aufweisen.

9. Seitenfensterrollo-Anordnung nach einem der Ansprüche 1 bis 8,
**dadurch gekennzeichnet, dass** im Innern der Führungsschiene (7) ein Führungskanal (117) vorgesehen ist, entlang welchem das von der Antriebseinrichtung (6) erzeugte Antriebsmoment auf den Schlitten (9) und den Zugstab (2) übertragen wird.

10. Seitenfensterrollo-Anordnung nach einem der Ansprüche 1 bis 9,
**dadurch gekennzeichnet, dass** der Schlitten (9) außen an der Führungsschiene (7) geführt ist.

11. Seitenfensterrollo-Anordnung nach einem der Ansprüche 1 bis 9,
**dadurch gekennzeichnet, dass** der Schlitten (9) im Führungskanal (17) der Führungsschiene (7) geführt ist.

12. Seitenfensterrollo-Anordnung nach einem der Ansprüche 1 bis 11,
**dadurch gekennzeichnet, dass** die Führungsschiene (7), die Rollbahn (1) mit Zugstab (2) und die Rollokassette (3) als vormontierte Baueinheit vorgesehen sind.

13. Seitenfensterrollo-Anordnung nach Anspruch 12,
**dadurch gekennzeichnet, dass** zur vormontierten Baueinheit ferner die Antriebseinrichtung (6) gehört.

## Claims

1. Roller blind arrangement for a side window of a vehicle, comprising a roller blind web (1) which in an extracted state completely or for the most part covers window areas (4, 5) separated from each other by a window dividing bar (8), a tension rod (2) attached to the extractable end of said roller blind web (1), a roller blind cartridge (3) for winding up said roller blind web (1), a driving means (6) for said roller blind web (1), a single guiding rail (7), and a slide (9) guided along said guiding rail (7) and driven by said driving means (6), wherein said tension rod (2) is attached to said slide (9),
**characterized in that** said single guiding rail (7) is fixed to said window dividing bar (8), that said tension rod (2) extends on both sides of said window dividing bar (8) along both window areas (4, 5), that said tension rod (2) is attached to said slide (9) by means of at least one attaching means (11) inserted through at least one elongated hole (10), and that said tension rod (2) is movably guided relative to said slide (9) along said at least one elongated hole (10).

2. Roller blind arrangement for a side window according to claim 1,
**characterized in that** a moving direction of said slide (9) predetermined by said guiding rail (7) is parallel to said window dividing bar (8).

3. Roller blind arrangement for a side window according to claim 1 or 2,
**characterized in that** a moving direction of said slide (9) predetermined by said guiding rail (7) is inclined relative to the longitudinal extension of said window dividing bar (8) in vertical direction or in approximately vertical direction.

4. Roller blind arrangement for a side window according to any one of the claims 1 to 3,
**characterized in that** said elongated hole (10) is provided at said tension rod (2), and that said attaching means (11) is attached to said slide (9).

5. Roller blind arrangement for a side window according to any one of the claims 1 to 4,
**characterized in that** said elongated hole (10) extends in a longitudinal direction of said tension rod (2).

6. Roller blind arrangement for a side window according to any one of the claims 1 to 5,
**characterized in that** said roller blind cartridge (3) is firmly connected to a lower end of said guiding rail (7).

7. Roller blind arrangement for a side window according to any one of the claims 1 to 6,
**characterized in that** said guiding rail (7) is attached with its upper end and its lower end to the vehicle body via attachment points (15, 21).

8. Roller blind arrangement for a side window according to any one of the claims 1 to 7,
**characterized in that** the lower end of said guiding rail (7), said roller blind cartridge (3), and said driving means (6) have a common attachment point (15) at the vehicle body.

9. Roller blind arrangement for a side window according to any one of the claims 1 to 8,
**characterized in that** a guiding duct (17) is provided inside said guiding rail (7), wherein a driving torque generated by said driving means (6) is transmitted to said slide (9) and said tension rod (2) along said guiding duct (17).

10. Roller blind arrangement for a side window according to any one of the claims 1 to 9,
**characterized in that** said slide (9) is guided exterior on said guiding rail (7).

11. Roller blind arrangement for a side window according to any one of the claims 1 to 9,
**characterized in that** said slide (9) is guided in said guiding duct (17) of said guiding rail (7).

12. Roller blind arrangement for a side window according to any one of the claims 1 to 11,
**characterized in that** said guiding rail (7), said roller blind web (1) with said tension rod (2), and said roller blind cartridge (3) are provided as a preassembled assembly.

13. Roller blind arrangement for a side window according to claim 12,
**characterized in that** further said driving means (6) belongs to said preassembled assembly.

## Revendications

1. Arrangement de store pour fenêtres latérales d'automobiles, comportant un pan de store (1) qui, en position sortie (2), couvre toute la surface ou la plus grande partie des fenêtres (4, 5) séparées l'une de l'autre par une entretoise (8), un bord rigide (2) fixé à l'extrémité sortante du pan de store (1), une cassette de store (3) pour enrouler le pan de store (1), un mécanisme d'entraînement (6) pour le pan de store (1), une seule glissière de guidage (7) et un glissoir (9) auquel le bord rigide (2) est fixé et qui est guidé le long de la glissière de guidage (7) et entraîné par le mécanisme d'entraînement (6),
**caractérisé en ce que** la seule glissière de guidage (7) est montée à l'entretoise (8) des fenêtres, que le bord rigide (2) s'étend des deux côtés de l'entretoise (8) des fenêtres le long des deux surfaces de fenêtre (4, 5), que le bord rigide (2) est fixé au glissoir (9) à l'aide d'au moins un moyen de fixation (11) passé à travers au moins un trou oblong (10) et que le bord rigide (2) est guidé de façon mobile par rapport au glissoir (9) dans l'au moins un trou oblong (10).

2. Arrangement de store pour fenêtres latérales d'automobiles selon la revendication 1,
**caractérisé en ce que** le sens de mouvement du glissoir (9) déterminé par la glissière de guidage (7) est parallèle à l'entretoise (8) des fenêtres.

3. Arrangement de store pour fenêtres latérales d'automobiles selon la revendication 1 ou 2,
**caractérisé en ce que** le sens de mouvement vertical ou approximativement vertical du glissoir (9) déterminé par la glissière de guidage (7) n'est pas parallèle par rapport à l'étendue en longueur de l'entretoise (8) des fenêtres.

4. Arrangement de store pour fenêtres latérales d'automobiles selon l'une quelconque des revendications 1 à 3,
**caractérisé en ce que** le trou oblong (10) est prévu dans le bord rigide (2) et que le moyen de fixation (11) est fixé au glissoir (9).

5. Arrangement de store pour fenêtres latérales d'automobiles selon l'une quelconque des revendications 1 à 4,
**caractérisé en ce que** le trou oblong (10) s'étend dans le sens longitudinal du bord rigide (2).

6. Arrangement de store pour fenêtres latérales d'automobiles selon l'une quelconque des revendications 1 à 5,
**caractérisé en ce que** la cassette (3) du store est rigidement liée au bout inférieur de la glissière de guidage (7).

7. Arrangement de store pour fenêtres latérales d'automobiles selon l'une quelconque des revendications 1 à 6,
**caractérisé en ce que** la glissière de guidage (7) est fixée à la carrosserie du véhicule par l'intermédiaire de points de fixation (15, 21) prévus à ses extrémités supérieure et inférieure.

8. Arrangement de store pour fenêtres latérales d'automobiles selon l'une quelconque des revendications 1 à 7,
**caractérisé en ce que** le bout inférieur de la glissière de guidage (7), la cassette (3) du store et le mécanisme d'entraînement (6) ont un même point de fixation (15) à la carrosserie du véhicule.

9. Arrangement de store pour fenêtres latérales d'automobiles selon l'une quelconque des revendications 1 à 8,
**caractérisé en ce qu'**il est prévu, à l'intérieur de la glissière de guidage (7), un canal de guidage (17) le long duquel le moment d'entraînement produit par le mécanisme d'entraînement (6) est transmis au glissoir (9) et au bord rigide (2).

10. Arrangement de store pour fenêtres latérales d'automobiles selon l'une quelconque des revendications 1 à 9,
**caractérisé en ce que** le glissoir (9) est guidé sur la face extérieure de la glissière de guidage (7).

11. Arrangement de store pour fenêtres latérales d'automobiles selon l'une quelconque des revendications 1 à 9,
**caractérisé en ce que** le glissoir (9) est guidé dans le canal de guidage (17) dans la glissière de guidage (7).

12. Arrangement de store pour fenêtres latérales d'automobiles selon l'une quelconque des revendications 1 à 11,
**caractérisé en ce que** la glissière de guidage (7), le pan de store (1) avec le bord rigide (2) et la cassette (3) du store sont prévus comme sous-groupe.

13. Arrangement de store pour fenêtres latérales d'automobiles selon la revendication 12,
**caractérisé en ce que** le sous-groupe comprend également le mécanisme d'entraînement (6).
